# EUROPEAN PATENT APPLICATION

(11) **EP 4 387 045 A1**
(43) Date of publication of application: **19.06.2024**
(21) Application number: 22213000.7
(22) Date of filing: 13.12.2022
(51) Int. Cl.: H02J 9/06, H02J 7/00

(54) **EMERGENCY CONVERTER WITH TEST FUNCTION**

(71) Applicant: Tridonic GmbH & Co KG, 6851 Dornbirn (AT)
(72) Inventor: Stevens, Frederick, 6850 Dornbirn (AT)
(74) Representative: Beder, Jens

(57) **Abstract**

The present invention relates to an emergency converter (1) comprising connectors (3, 4) configured to electrically connect an emergency lighting means (2) to the emergency converter (1) and a control circuit (7) configured to determine voltage across the connectors (3, 4) and/or current supplied to the emergency lighting means (2), wherein the control circuit (7) is configured to determine whether or not the determined voltage and/or current fulfills a predetermined condition and to perform a function test or an operation endurance test in response to the fulfilled predetermined condition. The emergency converter (1) may comprise a test switch (8, 15) configured to short-circuit the connectors (3, 4) or to disconnect the emergency lighting means (2) from the connectors (3, 4).

## Description

The invention is in the field of emergency lighting devices which have a self-test function. In particular, the invention relates to an emergency converter, an emergency luminaire and a method capable of detecting the status of a test switch.

In emergency light systems, converter devices (converters, ballasts, driver devices) are used for providing a supply voltage and/or current to an emergency light for a predetermined time in case mains supply fails. The voltage supply is maintained in case of a mains supply failure for a rated service time using energy stored in an energy storage device such as a rechargeable battery. The rated service time defines battery discharge duration during which time the emergency converter is required to drive the emergency light with a predetermined drive current. The maximum possible discharge duration depends on the emergency light and the capacity of the rechargeable battery.

The emergency lighting system has to be tested at predefined intervals by performing function and operation endurance tests. During the function test, which takes about two minutes, the function of the battery (accumulator), the illuminant and the emergency converter, especially its charger and inverter, are tested. In addition to the functions tested in the function test, the capacity of the battery is tested in the operation endurance test (duration test) by operating the illuminant or the emergency lamp with the battery for 2/3 of its rated operating time of, e.g., one or three hours. The time interval (e.g., weekly/monthly) between two successive functional tests is longer than the time interval (e.g., annually) between two successive operation endurance tests.

A function test is initiated for example by operating a test switch arranged at or externally to the emergency converter of the emergency light system. The test switch is often connected to the emergency converter via a two-wire interface. However, the number of input/output terminals of the emergency device, in particular its microcontroller, is limited or at least increasing the number of microcontroller pins increases the overall costs of the emergency converter.

Further, for many purposes, an emergency converter must be flat or slim, so that there are also limitations regarding the size of the terminal, i.e., number of electrical connections.

It is an object of the present invention to provide an apparatus and a method, which reduce the above problems. In particular, an object of the present invention is to provide an emergency converter, an emergency luminaire and a method, with which the test switch can be connected to the emergency converter with low effort and costs.

This object is achieved by the emergency converter, the emergency luminaire and the method according to the enclosed independent claims. Advantageous features of the present invention are defined in the corresponding subclaims.

This object is achieved by an emergency converter, an energy storage device and a method according to the enclosed independent claims. Advantageous features of the present invention are defined in the corresponding dependent claims.

According to the present invention, an emergency converter comprises connectors configured to electrically connect an emergency lighting means to the emergency converter, and a control circuit configured to determine voltage across the connectors and/or current supplied to the emergency lighting means connected to the connectors. The control circuit is configured to determine whether or not the determined voltage and/or current fulfills a predetermined condition and to perform a function test or an operation endurance test in response to the fulfilled predetermined condition.

In this way, a signal generated by at least one test switch can be received via the connectors, to which the emergency lighting means is connected, eliminating the need for additional connectors or wiring for the test switch. The emergency lighting means can be used for lighting or for escape route marking, for example.

The test switch can be a part of the emergency luminaire, which the emergency converter does not contain. Alternatively or in addition, the emergency converter can comprise at least one test switch connected to at least one of the connectors, wherein the at least one test switch is configured to short-circuit the connectors or to disconnect the emergency lighting means from at least one of the connectors.

The control circuit can be configured to determine that the voltage and/or current fulfills the predetermined condition when the control circuit detects a predetermined voltage and/or a predetermined current or when the control circuit detects a predetermined voltage curve and/or a predetermined current curve (e.g., the control circuit detects rising/falling edge although there is no switching signal for the emergency lighting means).

According to a preferred embodiment, the control circuit can be configured to determine the presence of a test request signal when the determined voltage and/or current fulfills the predetermined condition and can be configured to start the function test or the operation duration test at the end of the test request signal. In this way, the function or operation endurance test cannot be affected by the test request signal.

The function test or duration tests can stop automatically after a predetermined time or can be stopped by actuating the test switch again, wherein the control circuit terminates the functional test or operation endurance test if the determined voltage and/or current fulfills the predetermined condition while performing the functional test or the operational endurance test.

Alternatively or in addition, the control circuit can measure the duration of the test switch operation and use it to control other functions, wherein the control circuit determines the duration during which the determined voltage and/or current fulfills the predetermined condition.

The control circuit can be configured to start either the functional test or the operation endurance test depending on the determined duration, wherein different durations are assigned to the function test and the operation endurance test.

To account for the fact that the predetermined condition also occurs in the event of a fault, e.g., an unintentional short circuit, line break or failure of the emergency lighting means, the control circuit can be configured to detect a fault at the connectors when the duration exceeds a threshold.

The duration that the test switch still has to be pressed to trigger a test can be signaled to the user, wherein the control circuit is configured to generate, when the determined voltage and/or current fulfills the predetermined condition, a signal indicating a duration assigned to the function test or the duration test and is configured to output the generated signal to an indicator light or indicator light interface, e.g., the signal is output for as long as the user is to press the test switch, i.e., until the time period for triggering the test has elapsed.

The emergency converter can be configured to operate in emergency lighting mode or non-emergency lighting mode, wherein in the emergency lighting mode, the emergency converter is configured to output, to the emergency lighting means connected to the connectors, a predetermined drive current or voltage so that the emergency lighting means is illuminated, and in non-emergency lighting mode, the emergency converter is configured to output, to the emergency lighting means connected to the connectors, a current or voltage greater than zero and less than the predetermined drive current or voltage so that the emergency lighting means is not illuminated. In this way, the test request signal can be generated in the non-emergency lighting mode, which is a non-maintained lighting mode.

According to the present invention, an emergency luminaire/system comprises the described emergency converter and the emergency lighting means.

In addition, the emergency luminaire can comprise the test switch or a terminal configured to electrically connect the test switch to the emergency luminaire.

The emergency lighting means can comprise a plurality of lighting elements connected to each other in series or in parallel, wherein the test switch is configured to short-circuit at least one lighting element or to disconnect at least one lighting element from at least one other lighting element.

Alternatively or in addition, the emergency luminaire can comprise a housing and a translucent element elastically connected to the housing, wherein the test switch is a push-button mechanically connected to the transparent element. In this way, the switch can be arranged in an invisible area.

According to the present invention, a method for controlling an emergency converter comprises the steps of:
- detecting voltage across connectors for an emergency lighting means and/or current supplied to the emergency lighting means,
- determining whether or not the detected voltage and/or current fulfills a predetermined condition, and
- performing a function test or an operation endurance test in response to the fulfilled predetermined condition.

Embodiments of the invention are discussed in detail with reference to the enclosed figures, in which
- Fig. 1: shows a simplified block diagram of parts of an emergency light system with an emergency converter and an emergency lighting means according to a first embodiment of the present invention,
- Fig. 2: shows a diagram with the course of the voltage that is output by the emergency converter shown in Fig. 1 in the maintained lighting mode,
- Fig. 3: shows a diagram with the course of the voltage that is output by the emergency converter shown in Fig. 1 in the non-maintained lighting mode,
- Fig. 4: shows a simplified block diagram of parts of an emergency light system with an emergency converter and an emergency lighting means according to a second embodiment of the present invention,
- Fig. 5: shows a simplified block diagram of an emergency light system with an emergency converter and an emergency lighting means according to a third embodiment of the present invention,
- Fig. 6: shows a simplified block diagram of an emergency light system with an emergency converter and an emergency lighting means according to a fourth embodiment of the present invention,
- Fig. 7: shows a flowchart for a method for controlling the emergency converter according to a first embodiment, and.
- Fig. 8: shows a flowchart for a method for controlling the emergency converter according to a second embodiment.

In the figures, same reference numbers denote same or equivalent structures. The explanation of structures with same reference numbers in different figures is avoided where deemed possible for sake of conciseness.

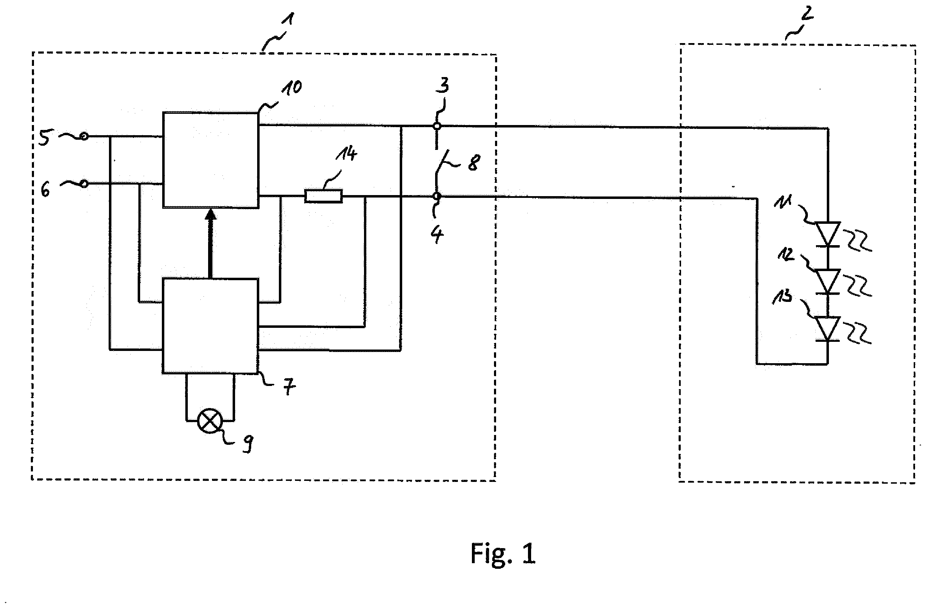

Fig. 1 shows an emergency lighting system with an emergency converter 1 detachably connected to a LED lighting device 2 (emergency lighting means). The parts shown in Fig. 1 can be housed in an emergency luminaire. The emergency converter 1 comprises a light device terminal 3, 4 (connectors) for connecting the LED lighting device 2 to the emergency converter 1, mains terminal 5, 6 (connectors) for connecting the emergency converter 1 to the mains supply, a control circuit 7, a test switch 8 connected in parallel to the light device terminal 3, 4, an indicator light 9 and a LED driver 10 for generating a LED drive current, which is output via the light device terminal 3, 4 to the LED lighting device 2. The LED lighting device 3 fed with the LED light current emits light from one or more LEDs 11..13. The emergency lighting system comprises an energy storage device and a charger/discharger circuitry for the energy storage device (not shown). The control circuit 7 is advantageously a microcontroller circuit or a dedicated application specific integrated circuit (ASIC) and controls the charger/discharger circuitry and the LED driver 10.

The emergency converter 1 is fed from mains supply in case of normal operations when mains supply is available. In case of a mains failure, malfunction or functional test, the emergency converter 1 is provided with electric energy from the energy storage device via the charger/discharger circuitry (not shown). The emergency lighting system can operate in the maintained lighting mode, in which the LED lighting device 2 is used for a conventional lighting as well as for the emergency lighting.

For the invention the structure of the charger/discharger circuitry, the LED driver 10 and the LED lighting device 2 are not essential for understanding the invention and may be of any known structure used in conjunction with emergency converters 1 for emergency lighting applications. The charger/discharger circuitry must only be capable to adapt its settings or to operate based on a signal of the control circuit 8.

The control circuit 7 is configured to perform a function test or an operation endurance test when the test switch 8 is actuated by a user, and to output a signal indicating the test result to the user via the indicator light 9. The indicator light 9 can be a bicolor indicator light, for example comprising a red-light emitting diode (LED) and a green LED, to indicate different results (fail/pass) or also different operational stati of the emergency converter. The test switch 8 can be implemented in different forms, for example as rocker switch, a toggle switch or preferably as a push button.

The control circuit 7 is configured to measure the voltage across the light device terminal 3, 4 and/or the voltage at a resistor 14 to detect the current supplied to the LED lighting device 2. The measured voltage/current is typically used to adjust the output power of the LED driver 10 and/or to detect faults or malfunctions of the LED lighting device 2. If the LED driver 10 includes a flyback converter, voltage/current supplied to the LED lighting device 2 can be determined indirectly via an auxiliary winding.

According to the present invention, the function of determining the output voltage/current is used to detect the status of the test switch 8. The test switch 8 is connected in parallel to the light device terminal 3, 4 and is configured to short-circuit the output of the LED lighting device 2 when the test switch 8 is actuated. The control circuit 7 is configured to detect the applied short circuit by determining that the voltage at the light device terminal 3, 4 is collapsing, in particular falls below a predefined threshold value, and/or that the current supplied to the LED lighting device 2 exceeds a threshold or changes by a certain amount. Similarly, the control circuit 7 detects when the short circuit has ended due to opening/release of the test switch 8 and starts the function test.

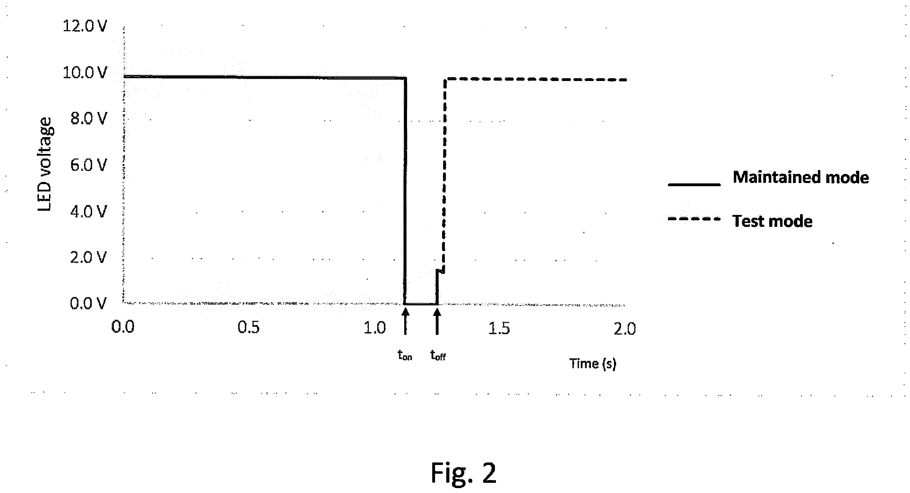

Fig. 2 shows the voltage at the light device terminal 3, 4 detected by the control circuit 7, wherein the test switch 8 is actuated at time tₒₙ by the user and released at t_{off}. In the diagram shown in Fig. 2, approx. 10V is output at the light device terminal 3, 4 in the maintained lighting mode and the short circuit at time tₒₙ reduces the voltage to 0V, so that the LED lighting device 2 lights off, which causes feedback to the user. The reduction in voltage can cause the control circuit 7 to control the LED driver 10 to increase the voltage, but it remains low due to the short circuit. When the short circuit is removed at time t_{off}, the voltage increases abruptly. This is detected by the control circuit 7, which then switches from the maintained lighting mode into the test mode to perform the function test. After the function test has been performed or after a certain time, the control circuit 7 switches back to the maintained lighting mode (not shown). In addition, the function test can be prematurely terminated or interrupted if the test switch 8 is actuated during the function test.

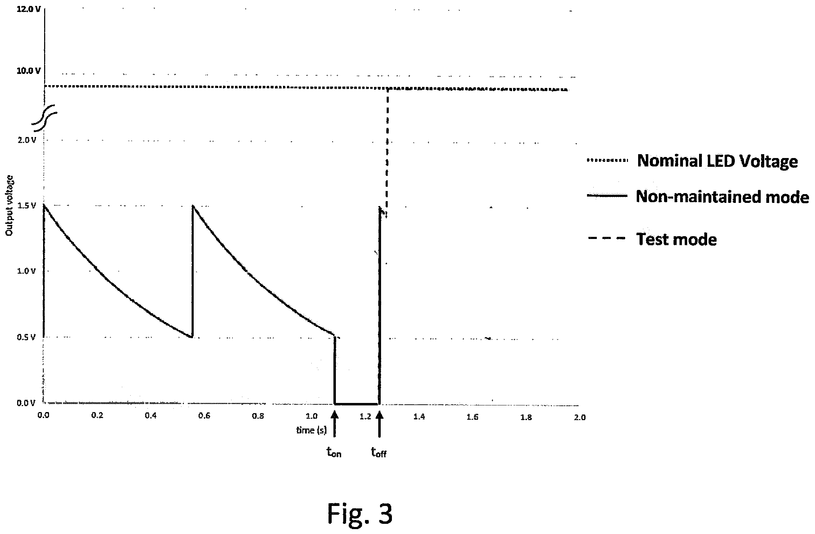

In order to detect the short circuit in the non-maintained lighting mode, the control circuit 7 can control the LED driver 10 to generate a sensor voltage/current that is high enough to detect the short circuit and low enough to prevent the LED lighting device 2 from lighting up. Fig. 3 shows the voltage at the light device terminal 3, 4 of the emergency converter 1 operating in the non-maintained lighting mode, in which the emergency converter 1 generates slow, narrow voltage pulses to detect the short circuit. The short circuit at time tₒₙ reduces the voltage to 0V, which increases abruptly when the short circuit is removed at time t_{off}. This is detected by the control circuit 7, which then switches from the non-maintained lighting mode into the test mode to perform the function test as described above.

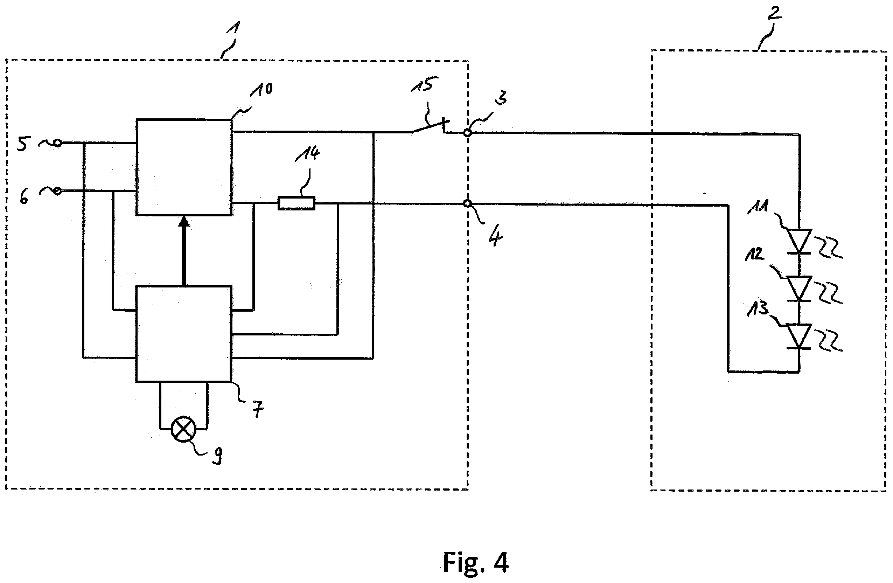

In the emergency light system of Fig. 1, a short circuit is applied by actuating the test switch 8. Alternatively or in addition, a test switch that disconnects the LED lighting device 2 from the LED driver 10 can be used. Fig. 4 shows an emergency light system, in which the control circuit 7 determines an open circuit caused by actuating a test switch 15 (break contact). The test switch 15 disconnects the LED lighting device 2 from the LED driver 10 as long as it is actuated und the control circuit 7 detects this open circuit by determining that the current supplied to the LED lighting device 2 is collapsing, in particular falls below a predefined threshold value, and/or that the voltage at the light device terminal 3, 4 exceeds a threshold or changes by a certain amount and starts the function test when the open circuit has ended due to closing/release of the test switch 15. Alternatively, both test switches 8 and 15 may be used, with the function test being started when the user actuates the test switch 8 and the operational endurance test being started when the user actuates the test switch 15, or vice versa.

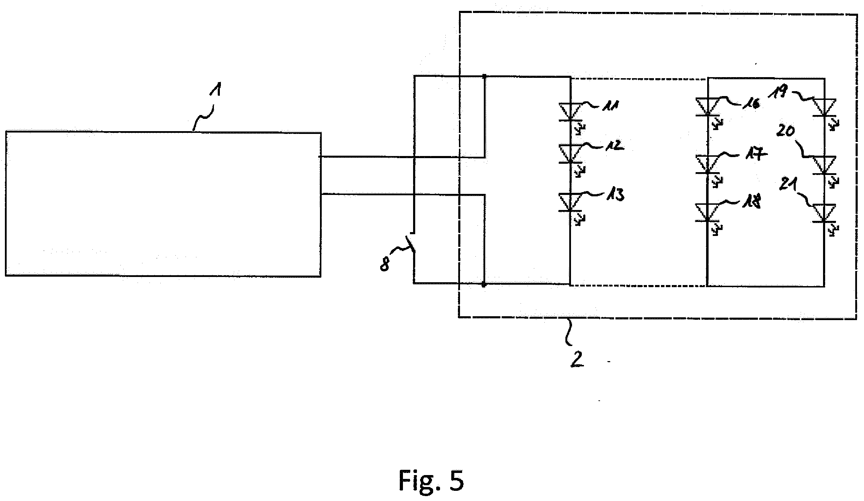

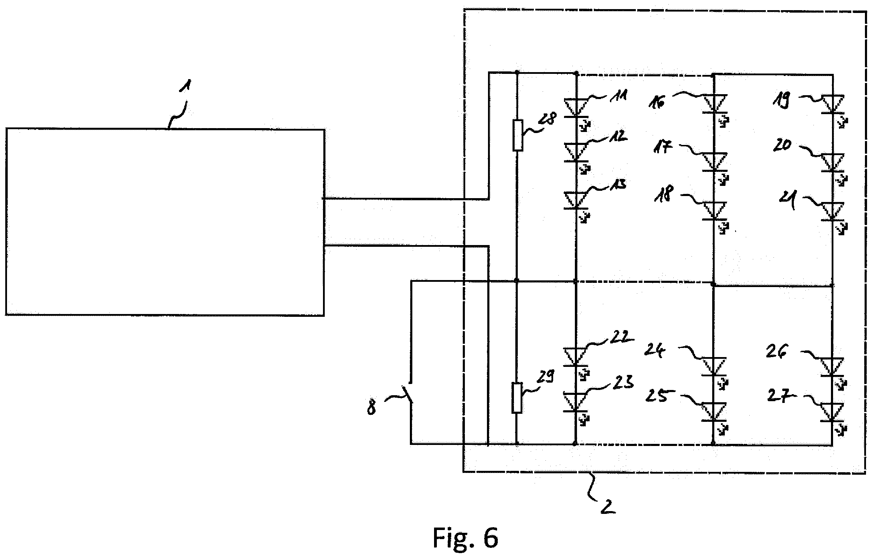

Even if the emergency converter 1 is located in a hardly accessible place, it may be advantageous to arrange at least one test switch 8, 15 on the LED illumination device 2. Fig. 5 and Fig. 6 show an emergency light system according to a third and fourth embodiment of the present invention, respectively, in which the test switch 8 is connected to a terminal of the LED lighting device 2 or is a part the LED lighting device 2. In Fig. 5, all LEDs 11..13 and 16..21 are short-circuited when the user actuates the test switch 8, whereas only a part of LEDs 11..13 and 16..27 is short-circuited in Fig. 6. In both cases, the control circuit 7 detects the applied short circuit by determining that the voltage at the light device terminal 3, 4 is collapsing or falls below a predefined threshold value, and/or that the current supplied to the LED lighting device 2 exceeds a threshold or changes by a certain amount and starts the test when the short circuit has ended due to opening/release of the test switch 8. The resistors 28 and 28 shown in Fig. 6 provide a necessary voltage change required for the non-maintained mode.

The function test or the operation duration test can be selected by actuating the respective test switch 8 or 15. Alternatively or in addition, different operation duration of the test switch 8, 15 can be assigned to the function and operation duration test. Since in Fig. 6 only a part (LEDs 22..27) of the LEDs is short-circuited by the test switch 8, the other part (LEDs 11..13 and 16..21) can be used to output information to the user while pressing the test switch 8. In particular, a flashing signal can be emitted by the other part as long as the user has to press the test switch 8, for example, to start the function test. The control circuit 7 has to filter out the flashing signal or consider it when detecting the status of the test switch 8. Alternatively or in addition, the information can be output via the indicator light 9.

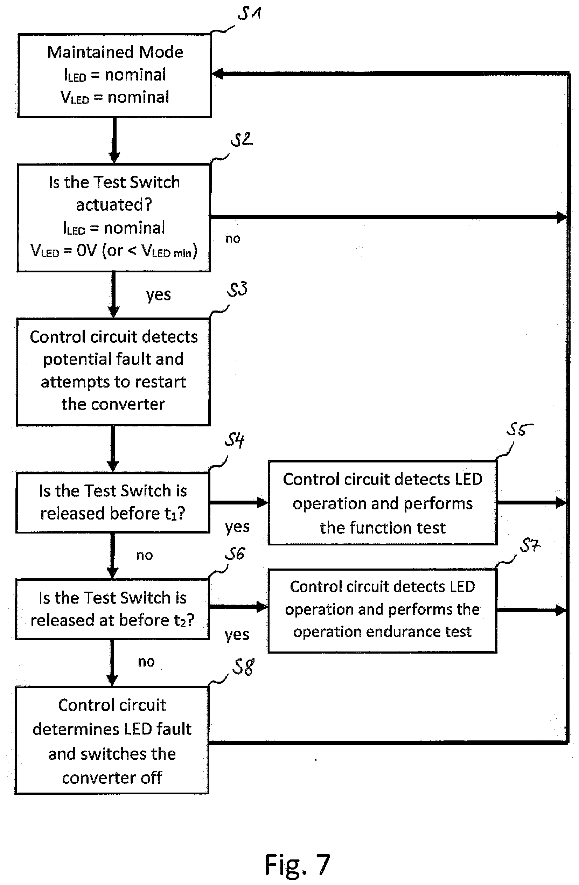

Fig. 7 shows a flowchart of a method for controlling the emergency converter 1 shown in Fig. 1 in the maintained mode. In step S1, the control circuit 7 sets nominal current I_{LED} and voltage V_{LED} and the LED driver 10 generates I_{LED} supplied to the LED lighting device 2. In step S2, the control circuit 7 determines whether the voltage V_{LED} at the light device terminal 3, 4 is reduced to 0V to determine whether the user has actuated the test switch 8. If the test switch 8 is actuated, the control circuit 7 detects potential fault and starts a timer in step S3. In step S4, the control circuit 7 determines whether the short circuit has been removed before the timer reaches time t₁ and performs the function test in step S₅ if the short circuit is removed before the timer reaches time t₁. In step S6 the control circuit 7 determines whether the short circuit has been removed before the timer reaches time t₂, where t₂> t₁, and performs the operation endurance test in step S6 if the short circuit is removed before the timer reaches time t₂. If the short circuit is not removed before timer reaches the time t₂, the control circuit 7 determines a fault of the emergency converter 1 and switches the converter off in step S8. In addition, the control circuit 7 can restart the emergency converter 1 after a certain waiting time.

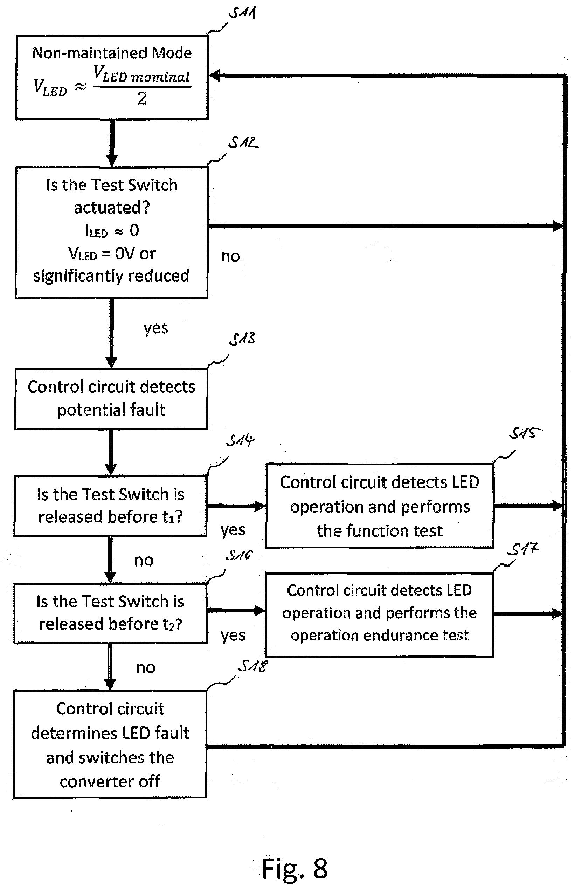

Fig. 8 shows a flowchart of a method for controlling the emergency converter 1 shown in Fig. 1 in the non-maintained mode. In step S11, the control circuit 7 sets the voltage V_{LED} to about half of the nominal voltage V_{LED nominal} (generally: o < V_{LED} < V_{LED nominal}). In step S12, the control circuit 7 determines whether the voltage V_{LED} at the light device terminal 3, 4 is reduced to 0V to determine whether the user has actuated the test switch 8. If the test switch 8 is actuated, the control circuit 7 detects potential fault and starts a timer in step S13. In step S14, the control circuit 7 determines whether the short circuit has been removed before the timer reaches time t₁ and performs the function test in step S₁₅ if the short circuit is removed before the timer reaches time t₁. In step S16 the control circuit 7 determines whether the short circuit has been removed before the timer reaches time t₂, where t₂> t₁, and performs the operation endurance test in step S16 if the short circuit is removed before the timer reaches time t₂. If the short circuit is not removed before timer reaches the time t₂, the control circuit 7 determines a fault of the emergency converter 1 and switches the converter off in step S18. In addition, the control circuit 7 can restart the emergency converter 1 after a certain waiting time.

## Claims

1. An emergency converter comprising
connectors (3, 4) configured to electrically connect an emergency lighting means (2) to the emergency converter (1), and
control circuit (7) configured to determine voltage across the connectors (3, 4) and/or current supplied to the emergency lighting means (2) connected to the connectors (3, 4),
**characterized in that**
the control circuit (7) is configured to determine whether or not the determined voltage and/or current fulfills a predetermined condition and to perform a function test or an operation endurance test in response to the fulfilled predetermined condition.

2. The emergency converter according to claim 1, further comprising
at least one test switch (8, 15) connected to at least one of the connectors (3, 4), wherein
the at least one test switch (8, 15) is configured to short-circuit the connectors (3, 4) or to disconnect the emergency lighting means (2) from at least one of the connectors (3, 4).

3. The emergency converter according to claim 1 or 2, wherein
the control circuit (7) is configured to determine that the determined voltage and/or current fulfills the predetermined condition when a predetermined voltage and/or a predetermined current is detected by the control circuit (7) or when a predetermined voltage curve and/or a predetermined current curve is detected by the control circuit (7).

4. The emergency converter according to any one of the preceding claims, wherein
the control circuit (7) is configured to determine the presence of a test request signal when the determined voltage and/or current fulfills the predetermined condition and is configured to start the function test or the operation duration test at the end of the test request signal.

5. The emergency converter according to any one of the preceding claims, wherein
the control circuit (7) is configured to terminate the functional test or operation endurance test if the determined voltage and/or current fulfills the predetermined condition while performing the functional test or the operational endurance test.

6. The emergency converter according to any one of the preceding claims, wherein
the control circuit (7) is configured to determine a duration during which the determined voltage and/or current fulfills the predetermined condition.

7. The emergency converter according to claim 5, wherein
the control circuit (7) is configured to start either the functional test or the operation endurance test depending on the determined duration, wherein different durations are assigned to the function test and the operation endurance test.

8. The emergency converter according to claim 6 or 7, wherein
the control circuit (7) is configured to detect a fault at the connectors (3, 4) when the duration exceeds a threshold.

9. The emergency converter according to any one of the preceding claims, further comprising
an indicator light (9) or an indicator light interface, wherein
the control circuit (7) is configured to generate, when the determined voltage and/or current fulfills the predetermined condition, a signal indicating a duration assigned to the function test or the duration test and is configured to output the generated signal to the indicator light (9) or the indicator light interface.

10. The emergency converter according to any one of the preceding claims, wherein
the emergency converter (1) is configured to operate in emergency lighting mode or non-emergency lighting mode,
in the emergency lighting mode, the emergency converter (1) is configured to output, to the emergency lighting means (2) connected to the connectors (3, 4), a predetermined drive current or voltage so that the emergency lighting means (2) is illuminated, and
in non-emergency lighting mode, the emergency converter (1) is configured to output, to the emergency lighting means (2) connected to the connectors (3, 4), a current or voltage greater than zero and less than the predetermined drive current or voltage so that the emergency lighting means (2) is not illuminated.

11. An emergency luminaire comprising the emergency converter (1) according to any one of the preceding claims and the emergency lighting means (2).

12. The emergency luminaire according to claim 11, further comprising the test switch (8, 15) or a terminal configured to electrically connect the test switch to the emergency luminaire (2).

13. The emergency luminaire according to claim 12, wherein
the emergency lighting means (2) comprises a plurality of lighting elements (11..13, 16..27) connected to each other in series or in parallel, and
the test switch (8, 15) is configured to short-circuit at least one lighting element (16..27) or to disconnect at least one lighting element (16..27) from at least one other lighting element (11..13).

14. The emergency luminaire according to claim 10 or 11, further comprising
a housing and a translucent element elastically connected to the housing, wherein
the test switch (8, 15) is a push-button mechanically connected to the transparent element.

15. A method for controlling an emergency converter, comprising the steps of:
detecting (S2; S12) voltage across connectors (3, 4) for an emergency lighting means (2) and/or current supplied to the emergency lighting means (2),
determining (S4, S6; S14, S16) whether or not the detected voltage and/or current fulfills a predetermined condition,
**characterized by**
performing (S5, S7; S15, S17) a function test or an operation endurance test in response to the fulfilled predetermined condition.
